(19) Europäisches Patentamt
European Patent Office
Office européen des brevets

(11) **EP 4 530 576 A1**

(12) **EUROPEAN PATENT APPLICATION**

(43) Date of publication:
**02.04.2025 Bulletin 2025/14**

(21) Application number: **23200999.3**

(22) Date of filing: **29.09.2023**

(51) International Patent Classification (IPC):
*G01C 21/34* (2006.01)   *G08G 1/00* (2006.01)
*G06Q 50/40* (2024.01)   *G06Q 10/047* (2023.01)

(52) Cooperative Patent Classification (CPC):
**G01C 21/343; G01C 21/3469; G06Q 10/047;
G06Q 10/0631; G06Q 50/40; G08G 1/202**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **KUMAR, Abhay
560100 Bangalore, Karnataka (IN)**

• **NAGAR, Deepak
110030 New Delhi (IN)**
• **RAMANATH, Vinay
560070 Bengaluru, Karnataka (IN)**
• **SCHRECK, Sebastian
90429 Nürnberg (DE)**
• **THIEM, Sebastian
91413 Neustadt an der Aisch (DE)**

(74) Representative: **Patentanwaltskanzlei WILHELM
& BECK
Prinzenstraße 13
80639 München (DE)**

(54) **METHOD AND SYSTEM FOR ROUTE PLANNING OF ELECTRIC VEHICLES**

(57) A system (200) and method (100) for route planning of electric vehicles (EVs). The method (100) includes receiving a plurality of parameters associated with an EV fleet. The method includes determining a dttr for each route of a plurality of routes based on the route information associated with each EV of the EV fleet. Further, the method includes determining a set of EVs from the EV fleet based on a validity of each EV of the EV fleet and mapping the set of EVs to a set of the routes of the plurality of routes based on the dttr for each route of the plurality of routes. The method also includes scheduling the set of EVs to the set of the routes based on the mapping.

FIG 4B

EP 4 530 576 A1

**Description**

The present disclosure relates generally to route scheduling and optimization for electric vehicles (EVs), and more specifically to a method and system for route planning of a fleet of EVs based on a distance to time ratio (ditto) of routes to maximize EV utilization, reduce carbon emissions, and increase operational efficiency in commercial fleets.

Electric vehicles (EVs) are being used due to a wide range of benefits such as clean emissions, low noise operation, and low maintenance. The EVs play a vital role in mitigating pollution, mitigating global warming, and preserving non-renewable energy sources.

One of the major problems faced by the fleet operators is effectively integrating EVs into their operations. One critical aspect that affects the efficient use of EVs is route scheduling, which can have a significant impact on battery life, charging infrastructure requirements, and overall operational costs. Most fleet operators currently employ manual scheduling or basic algorithms to allocate EVs to schedule routes. However, these approaches often lack the sophistication needed to optimize EV utilization, considering factors such as battery capacity, charging times, energy consumption, and various constraints related to the EV and the assigned routes.

Existing solutions use a Mixed Integer Linear Programming (MILP) based mathematical optimization approach for optimally assigning a plurality of EVs to routes, subject to capacity constraints. The problem is formulated as a multi-objective optimization problem, with the primary objective being the improvement of EV utilization. Such algorithm employs a decremental State of Charge (SoC) model, in which the SoC can either remain constant or decrease during scheduling. However, this approach takes into consideration only the distance of a route allocated to the EV which may not ensure optimal scheduling of the EVs in the EV fleet.

In light of the above, there remains a need for an improved EV route scheduling algorithm which can enhance overall EV utilization and promoting environmental and operational benefits.

The present disclosure seeks to overcome these challenges by scheduling EVs based on distance to time ratio (dttr) of routes which allows the EVs to be assigned not merely based on distance of the routes to be traversed, but also taking into consideration time required to traverse the routes. This revised approach leads to higher EV utilization, ensure that EVs cover larger number of routes in a given time period, and addresses the problem of scalability of the solution with an increased fleet of the EVs. By considering the dttr for the route scheduling process, the present disclosure offers a more comprehensive and efficient solution for managing commercial EV fleets, contributing to both environmental and operational improvements.

The object of the present disclosure is achieved by a computer-implemented method for route planning of a fleet of electric vehicles (EVs). The method comprises receiving a plurality of parameters associated with a plurality of EVs, wherein the plurality of parameters associated with the plurality of EVs comprises a type of EV, route information associated with the EV, time slot required for covering a route by the EV and battery information associated with the EV. The method also includes determining a distance to time ratio (dttr) for each route of a plurality of routes based on the route information associated with the EV and determining a set of EVs from the EV fleet based on a validity of each EV of the EV fleet. Further, the method includes mapping the set of EVs to a set of the routes of the plurality of routes based on the dttr for each route of the plurality of routes and scheduling the set of EVs to the set of the routes based on the mapping.

In one or more embodiments, mapping the set of EVs to the set of the routes based on the dttr for each route of the plurality of routes includes determining the plurality of routes comprising the dttr greater than a dttr threshold and sorting the plurality of routes comprising the dttr greater than the dttr threshold in an order. The method also includes determining the set of the routes from the sorted order to be mapped to the set of EVs; and mapping each EV of the set of EVs to the set of the routes based on the plurality of parameters associated with the EV fleet.

In one or more embodiments, the order comprises the plurality of routes sorted in an ascending order based on the dttr for each route of the plurality of routes.

In one or more embodiments, the validity of each of the plurality of EVs is determined based on a set of validity parameters.

In one or more embodiments, the method further comprises generating a notification indicating the scheduling of the set of EVs to the corresponding route of the plurality of routes and sending the notification to each EV of the set of EVs indicating the schedule.

The object of the present disclosure is also achieved by a system for route planning of electric vehicles (EVs). The system includes an interface configured to receive a plurality of parameters associated with an EV fleet, wherein the plurality of parameters associated with the EV fleet comprises types of EVs in the EV fleet, route information associated with each EV of the EV fleet, time slot required for covering a route by each EV of the EV fleet and battery information associated with each EV of the EV fleet. The system also includes a processor and a memory coupled to the processor, wherein the memory comprises instructions which, when executed by the processor, configures the processor to determine a distance to time ratio (dttr) for each route of a plurality of routes based on the route information associated with each EV of the EV fleet and determine a set of EVs from the EV fleet based on a validity of each EV of the EV fleet. The processor is also configured to map the set of EVs to a set of the routes of the plurality of routes based on the dttr for each route of the plurality of routes; and schedule the set of EVs to the set of the routes based on the mapping.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:

FIG 1        is a flowchart representation of a computer-implemented method for route planning of electric vehicles (EVs), in accordance with one or more embodiments of the present disclosure;

FIG 2        is a block diagram representation of a system for the route planning of the EVs, in accordance with one or more embodiments of the present disclosure;

FIG 3        is an example representation of the scheduling problem, in accordance with prior arts;

FIG 4A       is an exemplary representation of an EV covering the route based on the distance associated with the route, in accordance with prior arts;

FIG 4B       is an exemplary representation of an EV covering multiple routes based on the dttr, in accordance with one or more embodiments of the present disclosure;

FIGS 5A-5B   is an exemplary graphical depiction of comparison of number of routes achieved using existing solution based on distance associated with the route and proposed solution for route planning with dttr, in accordance with one or more embodiments of the present disclosure;

FIGS 6A-6B   is an exemplary graphical depiction of comparison of number of routes achieved using existing solution based on distance associated with the route and proposed solution for route planning with the dttr, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for route planning of electric vehicles (EVs) are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

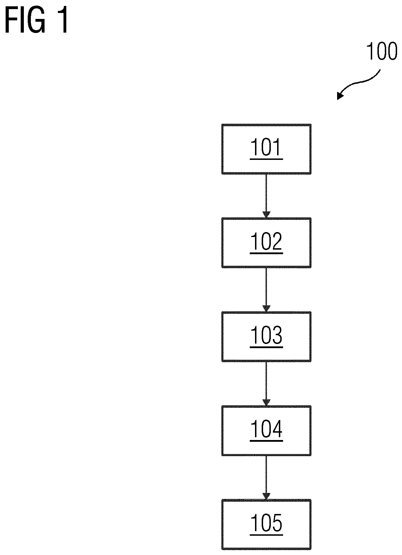

Referring now to FIG 1, illustrated is a flowchart of a method (as represented by reference numeral 100) for route planning of electric vehicles (EVs), in accordance with an embodiment of the present disclosure. As used herein, route planning refers to a process of allocating a specific route to an EV for traversing, such that the EV is utilized to a maximum capacity. This approach aims to enhance the efficient utilization of EVs in commercial fleets by allocating the EVs to the specific routes based on a distance to time ratio (dttr) of the routes, rather than just considering the distance to be travelled by the EV. Route planning may involve assigning routes to the EVs and ensuring that the EV completes the assigned route within an operation period of the EV. As a result, fleet operators can strategically plan and schedule the EVs such that the EVs are utilized to a maximum capacity.

As discussed, the present disclosure involves incorporating the distance to time ratio (dttr) for each route into the scheduling process, allowing for increased utilization of electric vehicles in commercial fleets. This involves planning and scheduling the EVs of the EV fleet not just based on the distance to be covered for the route but also the time required to cover the said distance and hence appropriately allocating the routes to be traversed to ensure maximum utilization of the EVs.

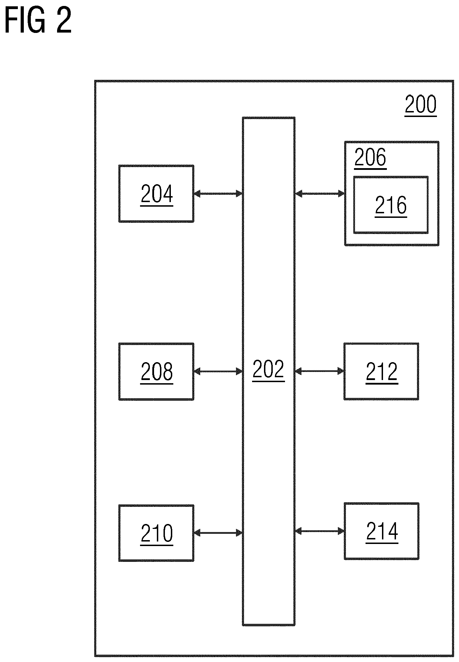

Referring to FIG 2, illustrated is a block diagram of a system 200 for route planning of the EVs, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to a screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for route planning of the EVs. In particular, the memory 206 includes a module arrangement 216 to perform steps for route planning of the EVs. Also, in the system 200, the memory 206 may be configured to store the data associated with or generated by the execution of the inventive steps.

Referring to FIGS 1 and 2 in combination, the various steps of the method 100 as described hereinafter may be executed in the system 200, or specifically in the processor 204 of the system 200, for - route planning of the EVs. For purposes of the present disclosure, the route planning of the EVs present method 100 is embodied as a scheduling algorithm for route planning of the EVs, with the two terms being interchangeably used hereinafter. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes receiving multiple parameters associated with the EV fleet 101. The multiple parameters may be received from a fleet management system, which typically tracks and manages various aspects of fleet operations, including route planning and vehicle maintenance for the EV. To gather this information, the system 200 may interface with the fleet management system through an Application Programming Interface (API) or other data exchange mechanisms, via the interface 208. Once the route information and the battery information has been obtained, those can be stored in the database 210, which serves as a central repository for the data required by the system 200. The database 210 may be designed using relational or non-relational database management systems, depending on the specific requirements and preferences of the system 200.

Herein, the plurality of parameters associated with the EV fleet may include but not limited to types of EVs, route information associated with each EV of the EV fleet, time slot required for covering a route by each EV of the EV fleet and battery information associated with each EV of the EV fleet. The types of EVs can be for example but not limited to Battery Electric Vehicle (BEV), Hybrid Electric Vehicle (HEV), Plug-in Hybrid Electric Vehicle (PHEV) and Fuel Cell Electric Vehicle (FCEV). The route information associated with each EV of the EV fleet comprises designated routes in a defined operation period for each EV of the EV fleet and a distance to be covered in each of the designated routes. In the present context, the defined operation period for the EV refers to a specific time window during which the EV is expected to complete its assigned routes and allied activities. This operation period is typically established by the fleet operator based on factors such as operational demands and resource availability. The defined operation period can range from an hour to multiple days or even weeks, depending on nature and specific needs of the fleet operations. During the operation period, the EV needs to cover the designated routes while also ensuring that the battery maintains a sufficient SoC to meet the energy requirements of the journey. Designated routes refer to the predetermined paths assigned to the EV during their defined operation period. These designated routes are typically planned by the fleet management system to meet operational demands and customer requirements. The designated routes often have specific start and end points, along with intermediate stops. The distance of designated routes refers to a total length (in distance units) that the EV needs to travel to complete a specific route assigned to it. This distance is calculated by summing the lengths of all segments between the start point, intermediate stops, and the end point of the designated route. The battery information associated with each EV of the EV fleet comprises a consumption factor representative of an energy consumed to cover a unit distance from a battery of the EV. The battery information is important for efficient scheduling of the EV fleet. The consumption factor represents the energy consumed by the EV to cover a unit distance, such as a kilometre or mile. It is usually expressed in terms of kilowatt-hours per unit distance (kWh/km or kWh/mi) or miles per kilowatt-hour (mi/kWh).

At step 102, the method 100 includes determining a distance to time ratio (dttr) for each route of a plurality of routes based on the route information associated with each EV of the EV fleet. Here the distance is the distance to be covered by the EV and the time is the time that is required to cover the said distance. The dttr is measured in kilometre per hour (km/h). For each EV the dttr is different is based on the routes allocated to the EV. The proposed solution is executed when a regular EV utilization may be enough to be achieved. The regular EV utilization is essentially when the EV's utilization efficiency is optimal. The EV utilization may be determined as a ratio between energy utilized to cover a unit distance from a battery of the EV and an input state-of-charge (SoC) of the battery of the EV at various points of time. The fleet operator may customize the EV utilization requirement based on the type of the EV, operational requirements, etc. For example, the fleet operator may set the regular EV utilization to be achieved as 70%.

At step 103, the method 100 includes determining a set of EVs from the EV fleet based on a validity of each EV of the EV fleet. The validity of each of the plurality of EVs is determined based on a set of validity parameters. The set of validity parameters can be for example but not limited to a type of the EV, a SoC of the EV, a battery capacity of the EV, etc. For example, whether the type of EV is suitable for the type of route that is to be covered, whether the battery is valid for the duration of time required to cover the distance, etc.

At step 104, the method includes mapping the set of EVs to a set of the routes of the plurality of routes based on the dttr of the plurality of routes. The method 100 includes determining the plurality of routes including the dttr greater than a dttr threshold and sorting the plurality of routes comprising the dttr greater than the dttr threshold in an order. The dttr threshold is a minimum dttr based on which the routes may be sorted in the order. The routes having the dttr below the dttr threshold may not be considered for sorting. The routes with the highest dttr are placed on top of the order and subsequently the other routes are sorted. Further, the method also includes selecting the top routes from the set of the routes of the sorted order to be mapped to the set of EVs. Here, the set of EVs are taken from the order based on the validity of the EV. Once the EVs and the routes are determined then the two are mapped based on the plurality of parameters associated with the EV fleet.

At step 105, the method includes scheduling the set of EVs to the set of the routes based on the mapping. Once the set of EVs are determined from the EV fleet and mapped to the set of routes, then the set of EVs are scheduled on to the mapped routes. The set of routes selected for scheduling the EV are the best performing and efficient for the EVs based on the dttr of the routes and the validity of the EVs. This approach enables the scheduling algorithm to assign appropriate EVs to the routes based on the dttr and not just the distance, ensuring that the EVs utilize the available energy to a maximum capacity.

In other embodiments, the method 100 further includes determining a scenario where a higher EV utilization than the regular EV utilization is required to be achieved. Then, the method 100 includes dividing the time slot required for covering the route by the EV into a plurality of sub-time slots and performing a mixed integer linear programming (MILP) based optimization technique for scheduling the plurality of EVs. Here, the MILP based optimization technique is performed on each of the plurality of sub-time slots and not on the time slot required for covering the route as a whole. The general method of performing of the MILP based optimization technique on the whole time slot may be highly time consuming and a complex procedure. However, when the time slot is divided into the sub-time slots and then the MILP based optimization technique is performed on each of the plurality of sub-time slots, then the execution time required is less and also the procedure becomes faster. Further, the method 100 includes determining the dttr for the plurality of routes based on an output of the MILP based optimization technique and scheduling the plurality of EVs to the corresponding route of the plurality of routes based on one of the validity and the dttr of the plurality of routes, and a historical data associated with the route planning of the plurality of EVs. Therefore, in the proposed solution the scenario when the EV fleet owner may opt for a low utilization of the EV fleet is also taken into consideration by introduction of the dttr based scheduling mechanism. Thereby providing a very comprehensive approach.

Herein, the above-mentioned MILP based optimization model is a mathematical formulation that aims to find the best possible solution to a problem while considering various constraints and objectives. In the present embodiments, the optimization model is a Mixed-Integer Linear Programming (MILP) model. MILP is a type of optimization problem that combines linear programming (LP) techniques with integer constraints. In a mixed-integer linear programming problem, some of the decision variables are required to take integer values, while others can take continuous values. This combination of integer and continuous variables allows MILP models to address a wide range of real-world problems, such as scheduling, routing, and resource allocation. The optimization model employed in the present method 100 seeks to optimally schedule the designated routes for the EV, considering constraints related to route information, battery information, etc.

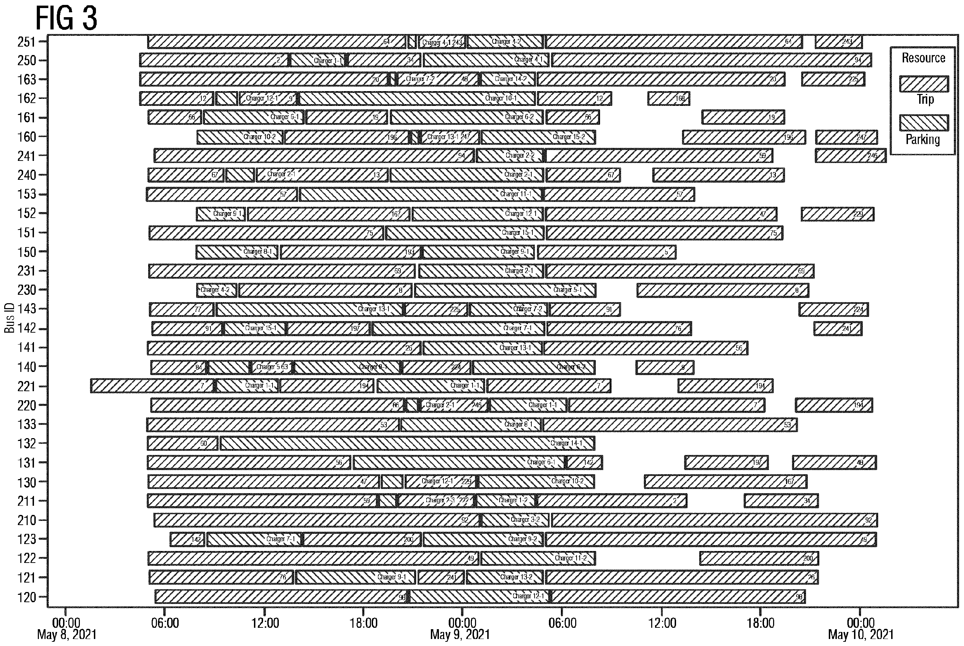

FIG 3 is an example representation of the scheduling problem, in accordance with prior arts. Referring to the FIG. 3, the scheduling of each of the EVs in the EV fleet needs to be performed by considering the charging time of the EV, the route allocated to the EV, etc which results in the said problem.

For an increasing number of EVs within the transport fleets, the complexity of an optimal scheduling i.e., coverage of all routes and maximal distance, increases significantly due to the non-convexity (binary decisions) of the problem and complex constraints. The constraints can be for example but not limited to specific vehicle types might only take certain routes, vehicle types have different battery capacities and hence different ranges, vehicle types have different efficiencies (kWh/km, efficiency is dependent on the ambient temperature and battery age, charging powers available in the depot needs to be considered, safety margins of State of Charge (SOC) of the batteries must be met, vehicles may not be available during certain planned time period, etc.

Since the scheduling of the EVs is performed during the operation of the EV (e.g., if an EV breaks down) solving of the optimal scheduling is time critical with a certain requirement for a maximum calculation time. Hence, the existing solutions may not be sufficiently equipped to address the above-mentioned problems.

Various existing methods solve the optimal scheduling problem as a mixed-integer optimization problem. However, this problem class does not scale with an increasing number of considered EVs and might hence not be suitable in all scenarios.

In the present embodiments, the optimization model provides that a sum of a product of a decision variable, a distance of each of the designated routes and the dummy routes, the consumption factor, and the dummy factor is within '0' and the battery constraint for all of the designated routes and the dummy routes in the defined operation period for the EV. Herein, the decision variable is used to determine whether a particular designated route or dummy route is assigned to a particular EV, with value being '1' if any one of the designated routes or the dummy routes is assigned to the EV and '0' otherwise. In the optimization model, the goal is to determine an optimal schedule for the EV by assigning designated routes and dummy routes while considering energy consumption and charging requirements. The optimization model achieves this by ensuring that the sum of the product of these variables (decision variable, distance, consumption factor, and dummy factor) for all the designated routes and dummy routes in the defined operation period for the EV is within '0' and the battery constraint. Thus, the optimization model aims to achieve a balanced state in which the sum of the energy consumed, and the energy replenished over all of the designated routes and the dummy routes in the defined operation period for the EV falls within a permissible range, considering the battery constraint.

Mathematical formulation of the disposition optimization is provided below considering the EV to be an electric bus or e-bus:

Obtaining EV/ e-bus, route information and CF data. B2R: Bus to route mapping decision variable {0,1} $r \in$ Routes; $b \in$ Buses; CF = consumption factor.

A first objective is to ensure maximum distance is covered by the EV fleet:

$$\sum_b \sum_n \left( Dist_r * B2R_{r,b} * (preference_r + 1) * MileageWeightage_b \right) \quad (1)$$

A second objective is to ensure fleet balancing:

If fleet balancing is True: Max $\sum_b (B_b) \ \forall \ b \in Bus$
If fleet balancing is False: Min

There are multiple constraints to be considered. The constraints include:

1. One route is assigned $\leq$ one EV:

$$\sum_b \left( B2R_{r,b} \leq 1 \right) \forall \ r \in Routes \quad (2)$$

2. Multiple routes are assigned to the EV depending upon its maximum battery capacity:

$$\sum_r \left( Dist_r * B2R_{r,b} * CF_{r,b} \leq maxBatteryCap_b * (1 - safetyMargin) * inputSoc_b \right) \forall \ b$$

$$\in Bus$$

$$(3)$$

3. EV is mapped based on type:

$$(B2R_{r,b} \leq B2R\_type\_match) \ \forall \ r \in Routes, \forall \ b \in Buses \quad (4)$$

4. EV is mapped as per availability time.

$$(B2RMinTime_b \geq BusAvailabilityTime) \ \forall \ b \in Buses \quad (5)$$

wherein:

$B2R_{r,b}$ is a decision variable.
$Dist_r$ is a distance of the designated route "r" in distance units.
$CF_{r,b}$ is the consumption factor in charge per distance units.
*safetyMargin* is the pre-defined safety margin representative of a minimum SoC for the battery for end of any one of designated routes "r" for the EV "b" in percentage.

In embodiments of the present disclosure, the computed optimal schedule is presented as an output of any one of the below mentioned decomposition techniques, to reduce the computational complexity mentioned below:

1. The route scheduling time slot is sliced into sub timeslots, e.g., 4-hour horizons to reduce the complexity of the mathematical model. This is done instead of solving the whole scheduling problem for a day.
2. The route scheduling problem could be preprocessed, e.g., regional sub problems for a limited number of busses selected from historical routing data.

In other embodiments of the present disclosure, the computed optimal schedule is presented as an output of a heuristic approach. Whenever a new route is to begin shortly for example in next 5-10 minutes, a decision needs to be taken on which bus will cover the specific route (e.g., an e-bus or a Diesel-bus). Whenever a new route has a "good" distance-to-time ratio (km/h), then an e-bus is assigned to the route.
Here, the judgement, whether a route has a "good" distance-to-time ratio can be taken based on the dttr (distance-to-time ratio). The dttr of all routes are sorted according to their value. Consider that in the fleet of busses available at a transport operator, there are 20% e-busses and 80% Diesel-busses. Consider that there are a total of 100 routes, of which 70 routes is the maximum routes that are run in parallel. The goal would be to maximize the utilization of the e-busses. Hence, if the dttr of the new route is in the top-20% of the first 70 dttr of all routes, then the route should be considered "good".
The proposed solution is based on a simple sorting and selection algorithm and run multiple times throughout the day, hence it is very fast. Simulation analysis could show whether there should be any additional factors to be included in the heuristics to improve the selection of a "good" route. For example, the distance of the route should be doable by an e-bus, traffic jams or ambient temperatures at particular times of the day could be considered, etc.

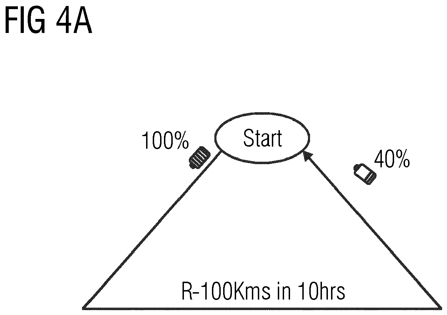

FIG 4A is an exemplary representation of an EV covering the route based on the distance associated with the route, in accordance with prior arts. Referring to the FIG. 4A, consider the EV is scheduled to cover a certain route of 100 Kms distance based on the traditional approach of scheduling based on the distance. At the start point the EV has a charge of 100%. The EV takes 10 hrs to cover the distance of 100 Kms. However, the EV still has 40% charge remaining and since the EV has covered the maximum distance of 100 Kms, the EV is going to be idle and hence the 40 % charge goes un-utilized.   There   this   may   not   be   the   best   route   schedule   for   the   EV's   optimal   utilization.   Here,   the

$$\text{dttr=}\frac{distance}{time} = \frac{100}{10} = 10$$
.

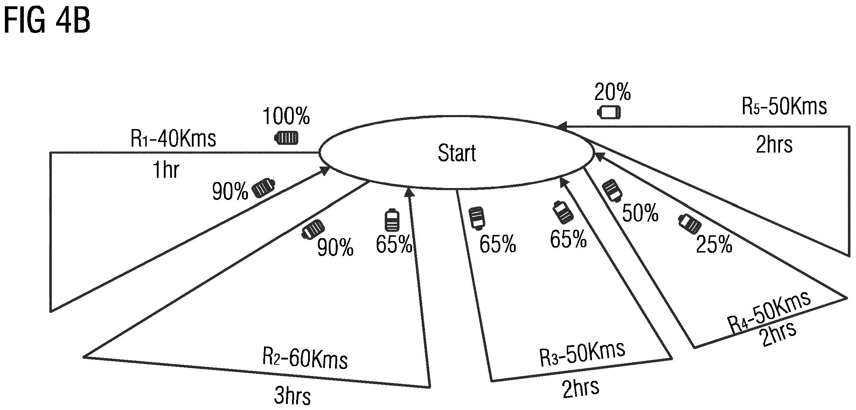

FIG 4B is an exemplary representation of an EV covering multiple routes based on the dttr, in accordance with one or more embodiments of the present disclosure. Referring to the FIG. 4B, in conjunction with the FIG. 4A, unlike to the conventional methods and systems, in the proposed method the dttr is considered for route planning of the EV rather than just the distance of the routes.
In the proposed solution, consider the first route R1 which is about 40 Kms and to be traversed in 1 hr time, R2 is 60 Kms in 3hrs time, R3 is 50kms in 2 hrs time, R4 is 50kms in 2 hrs time and R5 is 50kms in 2 hrs time. Here, the EV scheduled such that the dttr for R1 is 40, R2 is 20, R3 is 25, R4 is 25 and R5 is 25. Therefore, the total dttr is 135 with the highest priority being for the route R1. At the end of the journey the EV has only 20% of charge left as to the 40% in the FIG. 4A. Therefore, the proposed method of consideration of the dttr for the route planning is more efficient and ensures optimal utilization of the EV fleet. Therefore, the EV fleet owners can ensure maximum profitability with maximum utilization of the EV fleet.

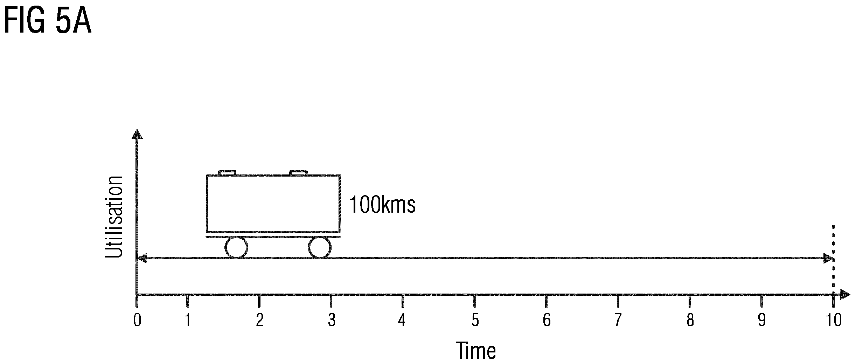

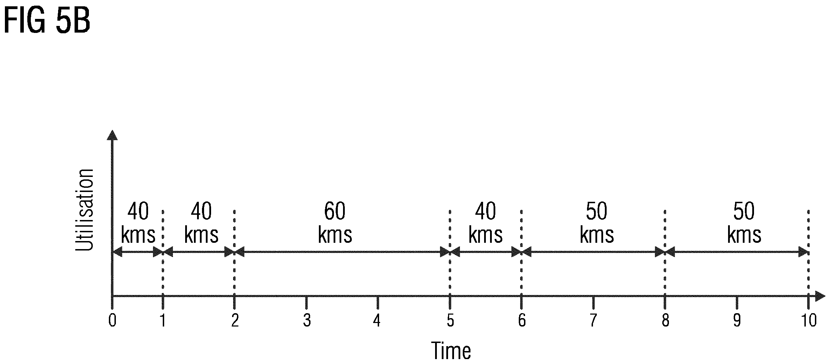

FIGS 5A-5B is an exemplary graphical depiction of comparison of number of routes achieved using existing solution based on distance associated with the route and proposed solution for route planning with the dttr, in accordance with one or more embodiments of the present disclosure. Herein, the EV covers a distance of 100 Kms in 10 hours when the route planning is performed based on only the distance to be covered by the EV. As a result, the EV is occupied for a full 10 hours just to cover a single route. In the proposed disclosure, as shown in the FIG. 5B, the EV covers six different routes R1-R6, at the same time of 10 hours. The proposed disclosure includes performing the route planning based on the dttr and not just the distance.

Further, the dttr of the route covered by the EV in the FIG. 5A is $\text{dttr=}\frac{distance}{time} = \frac{100}{10} = 10$. The dttr for the routes covered by the EV in the FIG. 5B are 40, 40, 20, 40, 25 and 25 i.e., the total dttr is 190 which is higher than the route allocation of the EV in the FIG. 5A for utilization in the same duration of time. As a result, the proposed disclosure ensures that the EV is efficiently utilized up to its maximum capacity. The proposed approach offers several benefits over traditional EV scheduling methods. By incorporating route scheduling using the proposed method, the scheduling algorithm enables a greater number of routes to be covered by the EV and more efficient utilization of EVs, allowing them to cover larger number of routes in the same duration of time. This results in efficient utilization of EVs, increased depot earnings, and lower carbon emissions.

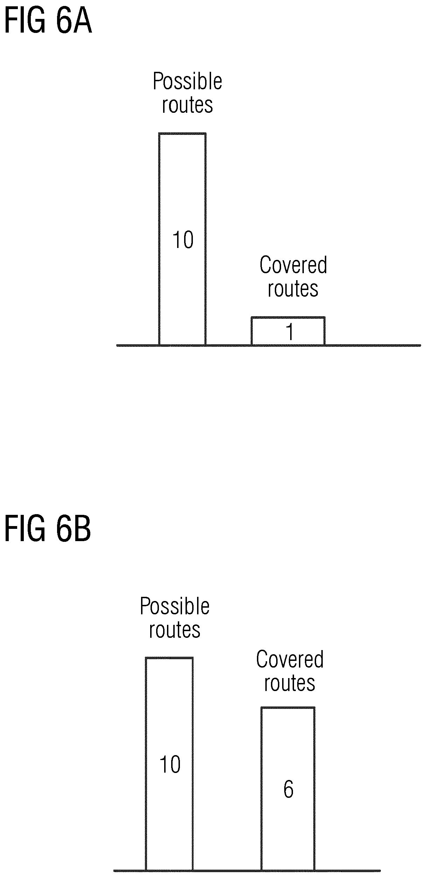

FIGS 6A-6B is an exemplary graphical depiction of comparison of number of routes achieved using existing solution based on distance associated with the route and proposed solution for route planning with dttr, in accordance with one or more embodiments of the present disclosure. Considering the FIGS 6A-6B in conjunction with the FIGS. 5A-5B, respectively. The FIG. 6A, is an exemplary graphical depiction of comparison of the number of routes achieved using the existing solution based on the distance associated with the route alone, as provided in the FIG. 5A. It may be noted that the number of routes that may be covered by the EV when the route planning is performed using the existing solution is just 1 in 10 hours duration of time, when the total possible number of routes is 10. Therefore, the efficiency is very low at 10%.

Further, the FIG 6B is an exemplary graphical depiction of the comparison of the number of routes achieved using the proposed solution for route planning with the dttr. It may be noted that the number of routes that may be covered by the EV when the route planning is performed using the proposed solution is 6 in 10 hours duration of time, as compared to the 1 route by implementing the existing method. Therefore, the results indicate that the proposed method 100 of route planning with the dttr significantly improves the number of routes covered by the EV and the utilization of EVs. It may be concluded that the utilization of the EV by implementing the proposed solution has increased by 50% as compared to the existing solutions. It may be appreciated that this is achieved by the proposed solution by assigning multiple routes to the EV based on the dttr and not just considering the distance to be covered by the EV.

Therefore, the proposed solution ensures a decrease in computational time for EV route planning, enables sustainable, resilient transport in cities, increases utilization of the EVs and reduces potential traffic jams at charging stations.

Thus, the method 100 and the system 200 of the present disclosure implements dttr based approach for optimally scheduling electric vehicles considering the distance travelled with respect to the time required for the same. By the scheduling based on the dttr, the scheduling algorithm addresses the challenges of underutilization of the EVs, non-optimal coverage of routes available, low efficiency of the fleet, etc. This approach has the potential to significantly enhance the efficiency and sustainability of electric vehicle fleet management systems in various industries and applications. The proposed scheduling algorithm can be integrated with existing fleet management systems, allowing operators to incorporate the advantages of the proposed approach without the need for significant changes to their existing infrastructure or processes. The proposed scheduling algorithm enables handling of large EV fleets and accommodate varying operational requirements, which may otherwise not be possible. Furthermore, the proposed scheduling algorithm can be adapted to consider various factors such as changes in energy costs, charging infrastructure availability, and regulatory requirements, providing a versatile and robust scheduling solution for EV fleet operators.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

## Claims

1. A computer-implemented method for route planning of electric vehicles (EVs), the method (100) comprising:

   receiving a plurality of parameters associated with an EV fleet, wherein the plurality of parameters comprises types of EVs in the EV fleet, route information associated with each EV of the EV fleet, time slot required for covering a route by each EV of the EV fleet and battery information associated with each EV of the EV fleet;
   determining a distance to time ratio (dttr) for each route of pa plurality of routes based on the route information associated with each EV of the EV fleet;
   determining a set of EVs from the EV fleet based on a validity of each EV of the EV fleet;
   mapping the set of EVs to a set of the routes of the plurality of routes based on the dttr for each route of the plurality of routes; and
   scheduling the set of EVs to the set of the routes based on the mapping.

2.  The method (100) according to claim 1, wherein mapping the set of EVs to the set of the routes based on the dttr for each route of the plurality of routes comprises:

    determining the plurality of routes comprising the dttr greater than a dttr threshold;
    sorting the plurality of routes comprising the dttr greater than the dttr threshold in an order;
    determining the set of the routes from the sorted order to be mapped to the set of EVs; and
    mapping each EV of the set of EVs to the set of the routes based on the plurality of parameters associated with the EV fleet.

3.  The method (100) according to claim 2, wherein the order comprises the plurality of routes sorted in an ascending order based on the dttr of each of the plurality of routes.

4.  The method (100) according to claim 2, wherein the validity of each of the plurality of EVs is determined based on a set of validity parameters.

5.  The method (100) according to claim 1, further comprising:

    generating a notification indicating the scheduling of the set of EVs to the corresponding route of the plurality of routes; and
    sending the notification to each EV of the set of EVs indicating the schedule.

6.  A system (200) for route planning of electric vehicles (EVs), the system (200) comprising:

    an interface configured to receive a plurality of parameters associated with an EV fleet, wherein the plurality of parameters associated with the EV fleet comprises types of EVs in the EV fleet, route information associated with each EV of the EV fleet, time slot required for covering a route by each EV of the EV fleet and battery information associated with each EV of the EV fleet;
    a processor (204); and
    a memory (206) coupled to the processor (204), wherein the memory (206) comprises instructions which, when executed by the processor (204), configures the processor (204) to:

        determine a distance to time ratio (dttr) for each route of a plurality of routes based on the route information associated with each EV of the EV fleet;
        determine a set of EVs from the EV fleet based on a validity of each EV of the EV fleet;
        map the set of EVs to a set of the routes of the plurality of routes based on the dttr for each route of the plurality of routes; and
        schedule the set of EVs to the set of the routes based on the mapping.

7.  A computer program product, comprising computer program code which, when executed by a processor (204), cause the processor (204) to carry out the method (100) of one of the claims 1 to 5.

8.  A computer-readable medium comprising a computer program product comprising computer program code which, when executed by a processor (204), cause the processor (204) to carry out the method (100) of one of the claims 1 to 5.

# FIG 1

100

FIG 2

FIG 3

# FIG 4A

100%     Start     40%

R-100Kms in 10hrs

FIG 4B

EP 4 530 576 A1

EP 4 530 576 A1

FIG 5A

FIG 5B

FIG 6A

Possible
routes

10

Covered
routes

1

FIG 6B

Possible
routes

Covered
routes

10

6

European Patent Office

Europäisches Patentamt
European Patent Office
Office européen des brevets

# EUROPEAN SEARCH REPORT

**Application Number**

EP 23 20 0999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROGGE MATTHIAS ET AL: "Electric bus fleet size and mix problem with optimization of charging infrastructure", APPLIED ENERGY, ELSEVIER SCIENCE PUBLISHERS, GB, vol. 211, 14 November 2017 (2017-11-14), pages 282-295, XP085415371, ISSN: 0306-2619, DOI: 10.1016/J.APENERGY.2017.11.051 * page 285 – page 287 * * page 289 * * figure 3 * | 1-8 | INV. G01C21/34 G08G1/00 G06Q50/40 G06Q10/047 |
| | | | TECHNICAL FIELDS SEARCHED (IPC) |
| | | | G01C G08G G06Q |

The present search report has been drawn up for all claims

| Place of search | Date of completion of the search | Examiner |
|---|---|---|
| The Hague | 5 March 2024 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)